Europäisches Patentamt

**European Patent Office**

**Office européen des brevets**

(11) Numéro de publication: **0 300 345 B1**

(12) **FASCICULE DE BREVET EUROPEEN**

(45) Date de publication de fascicule du brevet:
08.01.92

(51) Int. Cl.⁵: **A61C 19/04**

(21) Numéro de dépôt: 88111196.7

(22) Date de dépôt: 13.07.88

(54) **Support d'instrument dentaire intégrant des moyens simplifiés d'entrée et de sortie de données connectables à un système informatique.**

(30) Priorité: 23.07.87 FR 8710481

(43) Date de publication de la demande:
25.01.89 Bulletin 89/04

(45) Mention de la délivrance du brevet:
08.01.92 Bulletin 92/02

(84) Etats contractants désignés:
AT BE CH DE ES FR GB GR IT LI LU NL SE

(56) Documents cités:
DE-A- 3 345 465
US-A- 4 409 616

(73) Titulaire: **Creps, Georges**
**11 Place de la Résistance**
**F-14300 Caen(FR)**

(72) Inventeur: **Creps, Georges**
**11 Place de la Résistance**
**F-14300 Caen(FR)**

(74) Mandataire: **Casalonga, Axel**
**BUREAU D.A. CASALONGA - JOSSE Morassistrasse 8**
**W-8000 München 5(DE)**

EP 0 300 345 B1

## Description

L'invention concerne l'art dentaire ainsi que la médecine stomatologique, et plus particulièrement l'établissement d'une fiche patient ou d'un acte administratif correspondant à un examen clinique ou paradontologique, ou encore un traitement ou proposition de traitement.

Habituellement, lorsqu'un chirurgien-dentiste ou un stomatologiste procède à l'examen d'un patient, il est obligé d'utiliser les services d'une assistante ou d'une secrétaire pour établir la fiche ou l'acte selon ses indications, et lorsqu'il ne dispose d'aucune aide, il est obligé, pour noter lui-même chaque information, de poser son instrument dentaire et de quitter des yeux son champ d'action, d'où il résulte une grande perte de temps.

On connaît des programmes informatiques qui permettent d'entrer et de traiter les données dentaires, mais sans résoudre pour autant le problème précédent, puisque leur utilisation nécessite également l'emploi d'un assistant ou la dépose de l'instrument et l'abandon du champ d'action d'une manière répétée.

Le but de l'invention est d'éliminer les inconvénients précédents en réalisant un appareillage qui permette au chirurgien-dentiste ou au stomatologiste d'entrer lui-même ses données dentaires dans un système informatique sans lâcher l'instrument dentaire utilisé ni quitter des yeux le champ d'action.

L'invention consiste à réaliser un manche-support à l'extrémité duquel peut se monter de manière amovible l'instrument désiré, tel que sonde, miroir ou lumière, ce support comportant, par ailleurs, au moins un bouton d'entrée de données et une fenêtre d'affichage local, au moins des dernières données, ainsi qu'une liaison informatique avec le système informatique utilisé.

En particulier, avec un seul bouton de commande et un afficheur à segments relativement simple, on peut résoudre le problème d'une manière particulièrement efficace et peu encombrante.

D'autres particularités de l'invention apparaîtront dans la description qui va suivre d'un mode de réalisation pris comme exemple et représenté sur le dessin annexé, sur lequel :

la figure 1 est une vue schématique d'ensemble de l'instrument;

la figure 2 représente un exemple d'afficheur à segments; et

la figure 3 représente, en regard de la figure 2, les symboles que l'on peut afficher.

Le manche-support 1 selon l'invention comprend avant tout un support 2 pour la fixation amovible d'un instrument dentaire 3 de type connu, tel qu'une sonde, un miroir ou une lumière, cet instrument étant destiné à permettre l'examen.

Le manche-support 1 comporte, d'autre part, un bouton 4 d'entrée de données situé en bonne place pour être actionné aisément par un doigt du praticien, et également une fenêtre 5 permettant d'observer un afficheur local de représentation des données, ou au moins de la dernière introduite afin de limiter l'encombrement.

Enfin, le manche-support 1 comporte un moyen de liaison informatique avec le système informatique utilisé. Dans l'exemple représenté, ce moyen est constitué par un câble électrique 6 d'alimentation et de liaison, mais on pourrait avantageusement utiliser également une alimentation par piles et une liaison informatique à l'aide d'un émetteur-récepteur hertzien, infrarouge ou ultrasonore.

De la sorte, le praticien, notamment le dentiste ou le stomatologiste peut, tout en explorant la bouche de son patient à l'aide de son instrument 3, entrer les données correspondantes par le bouton 4 et contrôler par l'afficheur 5 l'exactitude de ces données, sans avoir à déposer l'ensemble de l'instrument ni à quitter des yeux son champ d'action.

Bien entendu, l'appareillage selon l'invention est utilisé conjointement avec un système informatique assurant la saisie et le traitement des données ainsi que leur représentation complète, par exemple sur écran vidéo et/ou sur imprimante.

L'emploi d'un bouton unique 4 de commande est possible grâce à une programmation séquentielle du système informatique, tandis que l'afficheur local 5, de format nécessairement réduit, peut être d'un type relativement simple et n'afficher que la dernière donnée introduite ou en cours d'introduction.

Ce afficheur 5 peut être du type matriciel, mais il est plus avantageux d'utiliser un afficheur du type à segments qui est non seulement plus économique, mais réduit beaucoup l'encombrement des circuits locaux d'exploitation qui sont nécessairement portés par le manche-support 1.

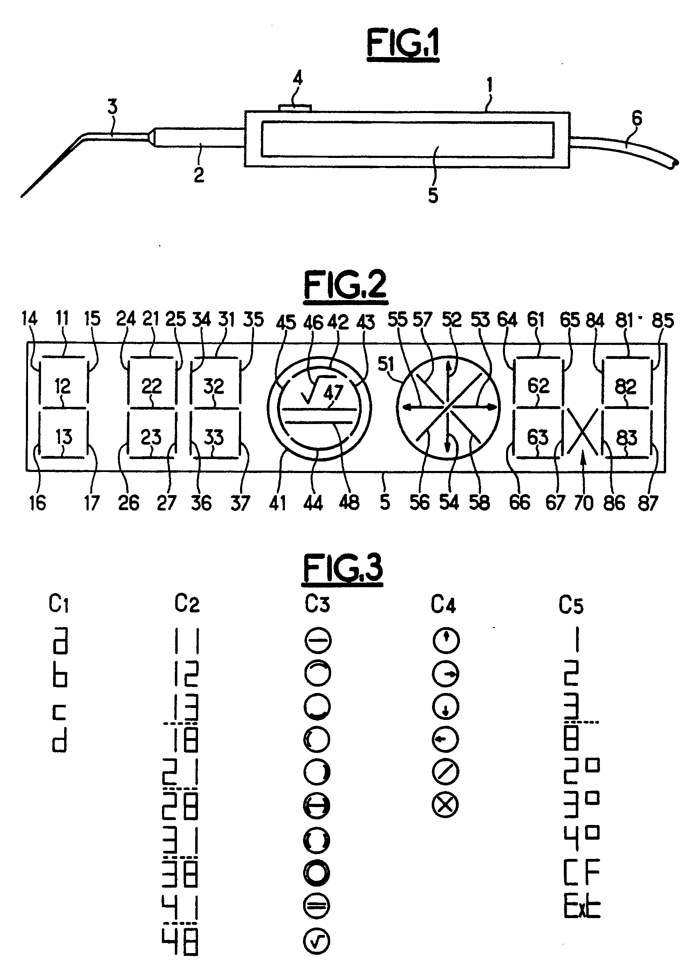

A titre d'exemple, la figure 2 montre une segmentation relativement simple qui permet, avec un nombre réduit de segments, de réaliser toutes les lettres, chiffres et symboles dont on a besoin.

Le premier groupe de segments de 11 à 17 est une représentation à sept segments traditionnels, et l'excitation sélective de ces segments, qu'il s'agisse de diodes photo-émettrices ou de cristaux liquides, permet d'afficher une des lettres a, b, c et d, comme représenté dans la colonne C1 de la figure 3. Cette lettre représente en permanence le programme choisi, de préférence par une commande directe au clavier du système informatique, les quatre programmes a, b, c et d correspondant respectivement à l'examen clinique, à l'examen paradontologique, à une indication de traitement ou à une proposition de traitement, par exemple pour une demande préalable de prothèse.

Les segments 21 à 37 forment deux chiffres à sept segments traditionnels permettant d'afficher selon la codification universelle le numéro de la dent, à l'aide des chiffres 11 à 18, 21 à 28, 31 à 38 et 41 à 48 pour les adultes, ou encore des chiffres 51 à 85 pour les dentitions provisoires des enfants. Dans la colonne C2 de la figure 3, on n'a fait figurer que les premiers de ces nombres les plus usuels.

Les segments spéciaux 41 à 48 permettent d'afficher les symboles représentés dans la colonne C3 de la figure 3. Les sept premiers correspondent à la figuration de position d'une ou de plusieurs obturations sur la dent considérée, tandis que le septième symbole représente une couronne, le huitième un bridge et le neuvième une racine. De la même façon, le groupe de segments spéciaux 51 à 58 permet d'afficher les symboles de la colonne C4 de la figure 3, à savoir quatre flèches de position et des signes diagonales : / et X.

Enfin, le dernier groupe de segments, 61 à 87, comprend respectivement deux groupes de sept segments, 61 à 67 et 81 à 87, séparés par un segment unique 70 en forme de croix de Saint André. Cet ensemble permet d'afficher les symboles représentés dans la colonne C5 de la figure 3.

Pour une programmation séquentielle, il est nécessaire de choisir un ordre de succession parmi les 32 dents d'une dentition adulte complète. Cet ordre peut par exemple être l'ordre des chiffres croissants, mais il peut tout aussi bien être un ordre continu, par exemple de gauche à droite, et aller par conséquent des nombres 18 à 11, puis 21 à 28, suivi de 38 à 31, et enfin 41 à 48.

Si le praticien a choisi le programme a, c'est-à-dire l'examen clinique, après l'apparition sur les segments 21 à 37 du numéro de la première dent dans l'ordre choisi ci-dessus, les segments 41 à 48 affichent séquentiellement à une cadence déterminée les neuf symboles de la colonne C3, jusqu'à ce que le praticien appuie sur le bouton 4 pour sélectionner celui des symboles qui convient. De préférence, au début de cette séquence, se place un intervalle de temps "néant" ou tout est éteint, ou alors seulement le segment 41 se trouve excité, ce qui permet de n'afficher aucun symbole et passer à la dent suivante . Inversement, si la séquence se termine sans que le praticien ait appuyé sur un bouton 4, celle-ci recommence cycliquement, toujours avec le même numéro de dent.

Une fois par conséquent que le praticien a appuyé sur le bouton 4 pour sélectionner le symbole voulu, la donnée correspondante est transmise à l'ordinateur et les segments 21 à 37 affichent la dent suivante, et ainsi de suite. A chaque instant, le praticien peut donc contrôler sur sa fenêtre locale le déroulement de l'entrée de données, et en même temps l'écran vidéo, dont est en général muni le système informatique, affiche en permanence le tracé complet des deux mâchoires avec le symbole correspondant inscrit en bonne place, l'ensemble du tracé étant réactualisé au cours du déroulement du programme qui peut être répété si nécessaire.

Si le praticien a choisi le programme b d'examen paradontologique, ce sont les segments 51 à 55 qui sont utilisés pour afficher le symbole de flèche de position (quatre premiers symboles de la colonne C4) suivi par un chiffre obtenu par les segments 61 à 67, ce chiffre indiquant la profondeur des poches paradontales en millimètres, de 1 à 7 ou de 1 à 8 dans la position indiquée par les flèches.

Dans le cas de ce programme il existe par contre une différence par rapport au programme a qui vient du fait que la sélection d'une flèche et d'un chiffre ne termine pas forcément la séquence car l'on peut avoir à inscrire plusieurs profondeurs pour une même dent, jusqu'à quatre correspondant aux quatre flèches. Le moyen le plus simple consiste à faire suivre successivement chacun des symboles de flèche par les chiffres successifs de 1 à 8, ce qui fait une séquence de 32 positions, plus une qui correspond à l'indication néant lorsqu'aucun symbole ne doit être inscrit.

Toutefois, pour gagner du temps, cette séquence peut être scindée en deux sous-séquences, la première affichant la direction de flèche, puis après sélection par le bouton 4, une deuxième séquence correspondant au chiffre. Le choix du chiffre correspondant ou de la position néant à l'aide du bouton 4 permet de sauter les derniers chiffres de la sous-séquence, mais ne passe pas à la dent suivante mais à la position de flèche suivante de la séquence flèches que l'on passe à la dent suivante. Si la position néant des chiffres de profondeur est en début de séquence, on peut donc sauter chaque position de flèche en appuyant deux coups successifs, ce qui est très rapide. Naturellement, dans ce cas encore, les données sont à mesure transmises à l'ordinateur et le tracé réactualisé en conséquence.

Si le praticien a sélectionné le programme c d'indication de traitement, dans ce cas chaque séquence correspondant à un numéro de dent utilise les cinq derniers symboles de la colonne C5 correspondant respectivement à une indication de traitement en second degré, troisième degré ou quatrième degré, une indication de coiffe ou une indication d'extraction. Il s'agit donc d'un déroulement de séquence simple comme dans le cas du programme a.

Enfin, si le praticien a choisi le programme d, c'est-à-dire une demande d'entente préalable de prothèse, la séquence relative à chaque numéro de dent est encore plus simple puisqu'elle ne comporte que les deux derniers symboles de la colonne C4, utilisant exclusivement les segments 51, 56, 57 et 58.

Naturellement, une fois les données entrées, contrôlées et affichées, elles peuvent être complétées par toute indication utile, en particulier le nom du patient, et donner lieu à l'édition à l'aide d'une imprimante de tout document papier, tel que fiche ou document administratif, ainsi éventuellement qu'une introduction sur fichier informatique pour une utilisation ultérieure.

A titre de variante, l'affichage des divers symboles indiqués correspondant aux diverses phases des quatres programmes peut être doublé par l'émission de signaux sonores, pouvant aller du simple bip jusqu'à l'énumération complète des diverses phases de chaque séquence par un dispositif de synthèse de la parole.

## Revendications

1. Manche-support (1) pour instrument dentaire (3), caractérisé par le fait qu'il comprend un raccord (2) pour fixer de manière amovible l'instrument (3), au moins un bouton (4) d'entrée de données et un afficheur (5) affichant au moins la dernière donnée introduite ou en cours d'introduction, ainsi qu'un moyen de liaison informatique avec un système informatique usuel programmé de manière séquentielle.

2. Manche-support selon la revendication 1, caractérisé par le fait que l'afficheur (5) est du type à segments, les segments étant agencés pour pouvoir afficher les lettres, chiffres et symboles nécessaires au déroulement des diverses séquences.

3. Manche-support selon une des revendications précédentes, caractérisé par le fait que l'activation sur l'afficheur local de chaque symbole d'une séquence est couplé à une émission sonore.

## Claims

1. Supporting handle (1) for a dental instrument (3), characterised in that it comprises a connection (2) for removably fixing the instrument (3), at least one data input key (4) and a display unit (5) displaying at least the last data item introduced or in the course of introduction, as well as a means for an information link with a conventional information system programmed in a sequential manner.

2. Supporting handle according to Claim 1, characterised in that the display unit (5) is of the segmental type, the segments being arranged to be capable of displaying the letters, figures and symbols required for the performance of the various sequences.

3. Supporting handle according to one of the preceding claims, characterised in that the activation, on the local display unit, of each symbol of a sequence is coupled with an audible emission.

## Patentansprüche

1. Haltegriff (1) für ein zahnärztliches Instrument (3), dadurch gekennzeichnet, daß es ein Verbindungselement (2) zum lösbaren Befestigen des Instrumentes (3), wenigstens einen Knopf (4) für die Eingabe von Daten und eine Anzeigeeinrichtung (5), die wenigstens das letzte im Zuge der Eingabe eingegebene Datum anzeigt, ebenso aufweist wie eine Informations-Verbindung mit einem üblichen Informationssystem, das sequentiell programmiert ist.

2. Haltegriff nach Anspruch 1, dadurch gekennzeichnet, daß das Anzeigegerät (5) Segmente besitzt, wobei die Segmente angeregt werden, um Buchstaben, Ziffern und Symbole aufzuzeigen, die für den Ablauf der verschiedenen Sequenzen notwendig sind.

3. Haltegriff nach einem der vorhergehenden Ansprüche, dadurch gekennzeichnet, daß die örtliche Aktivierung jedes Symbols einer Sequenz auf der Anzeigeeinrichtung mit einer Schallabgabe gekuppelt ist.

# FIG.1

# FIG.2

# FIG.3